# EUROPÄISCHE PATENTANMELDUNG

(11) **EP 4 711 161 A1**
(43) Veröffentlichungstag der Anmeldung: **18.03.2026**
(21) Anmeldenummer: 24200215.2
(22) Anmeldetag: 13.09.2024
(51) Int. Cl.: B60H 1/00, B60H 1/32, B60P 3/20, B62D 33/04, B65D 88/74

(54) **KOFFERAUFBAU MIT TRANSPORTKÄLTEMASCHINE UND ZIRKULATIONSWAND**

(71) Anmelder: Schmitz Cargobull AG, 48341 Altenberge (DE)
(72) Erfinder: KNÜWER, Felix Johann, 48712 Gescher (DE); KLÜMPER, Thorsten, 48712 Gescher (DE)
(74) Vertreter: Cohausz & Florack

(57) **Zusammenfassung**

Kofferaufbau für ein Nutzfahrzeug, insbesondere Lastkraftwagen, Anhänger oder Sattelauflieger, mit einer einen Laderaum (8) nach vorne begrenzenden Stirnwand (3), wobei an der Stirnwand (3) eine Transportkältemaschine (10) zum Kühlen des Laderaums (8) vorgesehen ist, wobei die Transportkältemaschine (10) wenigstens eine Einlassöffnung (11) für zu kühlende Luft und wenigstens eine Auslassöffnung (12) zum Ausblasen von Kühlluft aufweist, wobei eine von der Stirnwand (3) in Richtung des Laderaums (8) beabstandete und eine Anfahrebene definierende Zirkulationswand (16) vorgesehen ist, wobei zwischen der Stirnwand (3) und der Zirkulationswand (16) wenigstens ein Luftleitkanal (15) zum Leiten der zu kühlenden Luft aus dem Laderaum (8) zu der wenigstens einen Einlassöffnung (11) ausgebildet ist und wobei der wenigstens eine Luftleitkanal (15) eine Reihe von Einströmöffnungen zum Einströmen von zu kühlender Luft in den Luftleitkanal (15) aufweist, wobei die Einströmöffnungen eine Größe von kleiner 2000 mm² aufweisen.

## Beschreibung

Die Erfindung betrifft einen Kofferaufbau für ein Nutzfahrzeug, insbesondere Lastkraftwagen, Anhänger oder Sattelauflieger, mit einer einen Laderaum nach vorne begrenzenden Stirnwand, wobei an der Stirnwand eine Transportkältemaschine zum Kühlen des Laderaums vorgesehen ist, wobei die Transportkältemaschine wenigstens eine Einlassöffnung für zu kühlende Luft und wenigstens eine Auslassöffnung zum Ausblasen von Kühlluft aufweist, wobei eine von der Stirnwand in Richtung des Laderaums beabstandete und eine Anfahrebene definierende Zirkulationswand vorgesehen ist, wobei zwischen der Stirnwand und der Zirkulationswand wenigstens ein Luftleitkanal zum Leiten der zu kühlenden Luft aus dem Laderaum zu der wenigstens einen Einlassöffnung ausgebildet ist und wobei der wenigstens eine Luftleitkanal eine Reihe von Einströmöffnungen zum Einströmen von zu kühlender Luft in den Luftleitkanal aufweist.

Nutzfahrzeuge sind in unterschiedlichen Ausgestaltungen, etwa in Form von Lastkraftwagen, Anhängern oder Sattelaufliegern, bekannt. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge unterschiedliche Arten von Aufbauten auf, welche der Aufnahme der zu transportierenden Ladung in einem Laderaum dienen. So sind beispielsweise Planenaufbauten bekannt, die wenigstens eine Plane zum Verschließen wenigstens einer Seite und/oder eines Daches des Planenaufbaus aufweisen. Wenn die Plane entlang der Seitenwand verschoben werden kann, spricht man auch von sogenannten Curtainsidern.

Im Gegensatz dazu sind bei sogenannten Kofferaufbauten die den Laderaum seitlich begrenzenden Seitenwände und das Dach durch feste Wände verschlossen. Auch die den Laderaum nach vorne begrenzende Stirnwand ist bei Kofferaufbauten typischerweise als feste Wand ausgebildet, wohingegen die Rückwand meist durch zwei Flügeltüren, ein Rolltor oder dergleichen gebildet wird, um den Laderaum darüber von hinten beladen zu können. Die Seitenwände, das Dach und die Stirnwand sowie bedarfsweise der Boden von Kofferaufbauten sind in der Regel in Form von mehrschichtigen Paneelen aufgebaut, die äußere strukturgebende Decklagen und dazwischen eine Kernlage aus geschäumtem Kunststoff umfassen. Die Decklagen können bedarfsweise selbst jeweils mehrlagig ausgebildet sein und dienen der Aussteifung der Paneele, weshalb die Decklagen meist wenigstens eine Schicht aus einem Metall und/oder einem faserverstärkten Kunststoff aufweisen. Da die Kofferaufbauten geschlossen sind und aufgrund des geschäumten Kunststoffs eine hohe thermische Isolation bereitstellen, sind Kofferaufbauten in besonderem Maße nicht nur für den Transport von feuchtigkeitsempfindlichen Gütern, also den sogenannten Trockentransport, sondern insbesondere auch von temperaturempfindlichen Gütern, also beispielsweise für den sogenannten Kühltransport geeignet.

Bei Kühltransporten ist in der Regel sicherzustellen, dass die Temperatur der temperaturempfindlichen Güter einen von den jeweiligen Gütern abhängigen Temperaturgrenzwert nicht übersteigt, um Qualitätsminderungen der Güter zu verhindern. Deshalb weisen viele der für den Kühltransport eingesetzten Kofferaufbauten eine sogenannte Transportkältemaschine auf, mit der eine aktive Kühlung des Laderaums und somit der in dem Laderaum aufgenommenen Güter bzw. Ladung erfolgen kann. Dabei ist die Transportkältemaschine meist an der Stirnwand des Kofferaufbaus vorgesehen, insbesondere montiert.

Unabhängig von der Anordnung der Transportkältemaschine erfolgt die Kühlung des Laderaums durch die Transportkältemaschine in aller Regel, indem zu kühlende Luft aus dem Laderaum angesaugt, abgekühlt und als Kühlluft zurück in den Laderaum geblasen wird. Dabei weist die Transportkältemaschine zum Ansaugen der zu kühlenden Luft aus dem Laderaum typischerweise wenigstens eine Einlassöffnung auf, über die die zu kühlende Luft in die Transportkältemaschine strömt. Das Ausblasen der Kühlluft aus der Transportkältemaschine in den Laderaum erfolgt hingegen mittels wenigstens einer Auslassöffnung, auch Kühlluftöffnung genannt.

Um die Strömung der in die Transportkältemaschine einströmenden zu kühlenden Luft in gewünschter Weise zu leiten, weisen die für den Kühltransport eingesetzten Kofferaufbauten häufig eine sogenannte Zirkulationswand auf. Dabei ist die Zirkulationswand typischerweise in Richtung des Laderaums, also in Längsrichtung des Kofferaufbaus, von der Stirnwand beabstandet angeordnet. Dementsprechend bestimmt die Anordnung der Zirkulationswand im Laderaum, bis wohin der Laderaum nach vorne, also in Richtung Stirnwand, mit Gütern beladen werden kann. Aus diesem Grund kann die Ebene, die durch die dem Laderaum bzw. der Rückwand des Kofferaufbaus zugewandte Fläche der Zirkulationswand definiert ist, auch als Anfahrebene verstanden werden, bis an die heran die Ladung in Richtung der Stirnwand gefahren werden kann.

Die Zirkulationswand dient in der Regel dazu, eine Luftzirkulation im Laderaum zu erreichen, um den gesamten Laderaum effizient kühlen zu können. Die aus der Transportkältemaschine als Kühlluft ausgetretene Luft wird im Bereich des Dachs über die Ladung hinweg geblasen, sinkt im Laderaum nach unten und strömt bodenseitig zur Stirnwand. Dort wird die Luft als zu kühlende Luft über den wenigstens einen Luftleitkanal, der zwischen der Stirnwand und der Zirkulationswand ausgebildet ist, zur Transportkältemaschine gesaugt, sodass sich ein geschlossener Luftkreislauf ergibt.

Zwischen der Stirnwand und der sich typischerweise nicht bis zu den Seitenwänden erstreckenden Zirkulationswand sind seitlich zur Zirkulationswand vertikale Begrenzungen vorgesehen. Bei den Begrenzungen kann es sich um Begrenzungen des wenigstens einen Luftleitkanals handeln. Die Begrenzungen können zudem Öffnungen aufweisen, über welche Luft aus dem Laderaum seitlich in den wenigstens einen Luftleitkanal hinter der Zirkulationswand einströmen kann.

Bevor die aus dem Laderaum angesaugte, zu kühlende Luft in die Transportkältemaschine einströmt, passiert die Luft ein in die wenigstens eine Einlassöffnung eingesetztes Gitter. Das Gitter soll ein Einsaugen von Fremdkörpern, wie insbesondere Papier und Kunststoff, aus dem Laderaum verhindern. Dies gelingt jedoch nicht in allen Fällen zufriedenstellend, weshalb es zu Verstopfungen, Beschädigungen und sogar Bränden in der Transportkältemaschine kommen kann.

Daher liegt der vorliegenden Erfindung die Aufgabe zugrunde, den Kofferaufbau der eingangs genannten und zuvor näher beschriebenen Art derart auszugestalten und weiterzubilden, dass Störungen und Beschädigungen der Transportkältemaschine vermieden werden können.

Diese Aufgabe ist bei einem Kofferaufbau nach dem Oberbegriff von Anspruch 1 dadurch gelöst, dass die Einströmöffnungen eine Größe von kleiner 2000 mm² aufweisen.

Die Bereitstellung von kleinen Einströmöffnungen hat zur Folge, dass aus dem Laderaum angesaugte Fremdkörper, insbesondere in Form von Papier und Kunststoff, nicht bis in die Transportkältemaschine und auch allenfalls bedingt hinter die Zirkulationswand gelangen. Im Laderaum kann Papier in Form von Verpackungsresten, ehemals an der Ladung angebrachten Zetteln oder dergleichen vorhanden sein und aufgrund des geringen Gewichts leicht von der Transportkältemaschine angesaugt werden. Auch Kunststoff in Form von Folien oder Folienresten, die von Verpackungen oder dergleichen stammen können, kann von der Transportkältemaschine leicht angesaugt werden und in der Transportkältemaschine zu Problemen führen. Zudem kommen als Fremdkörper auch Schnüre, Fäden oder Bänder in Frage, die ursprünglich zum Verpacken oder Verzurren der Ladung im Laderaum verwendet wurden. Andere Fremdkörper sind ebenfalls denkbar. Die vorliegend relevanten Fremdkörper sind insbesondere so groß oder bilden eine so große Fläche, dass die Fremdkörper die Einströmöffnungen nicht passieren können. Die Fremdkörper bleiben also bestenfalls an den Einströmöffnungen hängen, beispielsweise so lange, wie die Transportkältemaschine ununterbrochen betrieben wird.

Durch die Anordnung der Einströmöffnungen kann anders als bei bestehenden Gittern in den Einlassöffnungen der Transportkältemaschinen erreicht werden, dass die angesaugten Fremdstoffe zuverlässig auf den Ladeboden fallen, wenn die Transportkältemaschine ausgeschaltet wird. Beim Reinigen des Laderaums werden die Fremdkörper dann entfernt und können nach dem erneuten Starten der Transportkältemaschine nicht erneut angesaugt werden. Die Gefahr, dass die Fremdkörper irgendwann von der Transportkältemaschine eingesaugt werden, kann mithin erheblich gesenkt werden.

Bei einer ersten besonders bevorzugten Ausgestaltung des Kofferaufbaus weisen die Einströmöffnungen eine Größe von kleiner 1000 mm² auf. So können auch deutlich kleinere Fremdkörper daran gehindert werden, in den Luftleitkanal eingesogen zu werden, ohne die freie Öffnungsfläche zu sehr einzuschränken. Dies kann insbesondere auch für Einströmöffnungen von kleiner 750 mm², insbesondere kleiner 600 mm², gelten.

Damit die Fremdkörper nach dem Abstellen der Transportkältemaschine wieder zu Boden fallen können, bietet es sich an, wenn die Einströmöffnungen wenigstens einem seitlichen Rand der Zirkulationswand und/oder einen unteren Rand der Zirkulationswand zugeordnet sind. Die Fremdkörper gelangen dann bedarfsweise allenfalls bedingt oder geringfügig hinter die Zirkulationswand, wo sich die Fremdkörper verfangen und/oder verkeilen können.

Fertigungstechnisch kann es bevorzugt sein, wenn die Einströmöffnungen durch wenigstens einen Öffnungseinsatz in wenigstens einer Einströmaussparung des wenigstens einen Luftleitkanals gebildet sind. Es können also Nutzfahrzeuge weiter mit den üblichen, großflächigen Einströmaussparungen der Luftleitkanäle gefertigt werden. Die Öffnungsweiten können dann einfach durch den Einströmaussparungen zugeordnete und an die Einströmaussparungen angepasste Öffnungseinsätze beschränkt werden.

Dabei bietet es sich zum Verhindern des Einsaugens von Fremdkörpern bei möglichst geringer Beeinträchtigung der Luftströmung weiter an, wenn der wenigstens eine Öffnungseinsatz im Bereich der Einströmöffnungen wenigstens im Wesentlichen in Form von Drähten, Bändern, eines Netzes, eines Lochblechs und/oder eines Gitters ausgebildet ist. So bleibt ein großer freier Öffnungsquerschnitt für die zu kühlende Luft erhalten. Die beschriebenen Öffnungseinsätze können zudem einfach und kostengünstig gefertigt werden.

Der wenigstens eine Öffnungseinsatz kann zudem einfach und kostengünstig aus einem Kunststoff, faserverstärkten Kunststoff, und/oder einem Metall, insbesondere Stahl oder Aluminium, gebildet werden. Kunststoffe zeichnen sich durch ein geringes Gewicht aus und korrodieren nicht. Metalle können zwar Korrosion unterworfen sein, sind aber in vielen Fällen duktiler und daher widerstandsfähiger.

Die Fertigung des Kofferaufbaus kann vereinfacht werden, wenn der wenigstens eine Öffnungseinsatz formschlüssig und/oder kraftschlüssig in die wenigstens eine Einströmaussparung eingesetzt wird. Dabei bietet es sich insbesondere an, wenn der Öffnungseinsatz in die Einströmaussparung eingeklipst oder eingelegt wird.

Eine besonders einfache Lösung kann auch dadurch bereitgestellt werden, dass sich die wenigstens eine Einströmaussparung wenigstens im Wesentlichen über die gesamte Breite der Zirkulationswand erstreckt. Es müssen mithin nicht weitere unnötige Einströmaussparungen bereitgestellt werden. Alternativ oder zusätzlich kann sich der wenigstens eine Öffnungseinsatz in besonders einfacher Weise bereitstellen, wenn sich der wenigstens eine Öffnungseinsatz wenigstens im Wesentlichen über die gesamte Breite der Zirkulationswand erstreckt.

Nachfolgend wird die Erfindung anhand einer lediglich ein Ausführungsbeispiel darstellenden Zeichnung erläutert. In der Zeichnung zeigt
- Fig. 1: ein Nutzfahrzeug mit einem erfindungsgemäßen Kofferaufbau in einer perspektivischen Ansicht,
- Fig. 2: ein Detail des Kofferaufbaus aus Fig. 1 im Bereich der Stirnwand in einer perspektivischen Schnittansicht,
- Fig. 3: das Detail des Kofferaufbaus aus Fig. 1 im Bereich der Stirnwand in einer Schnittansicht von der Seite und
- Fig. 4: das Detail des Kofferaufbaus aus Fig. 1 im Bereich der Stirnwand in der Schnittansicht IV-IV aus Fig. 3 von oben.

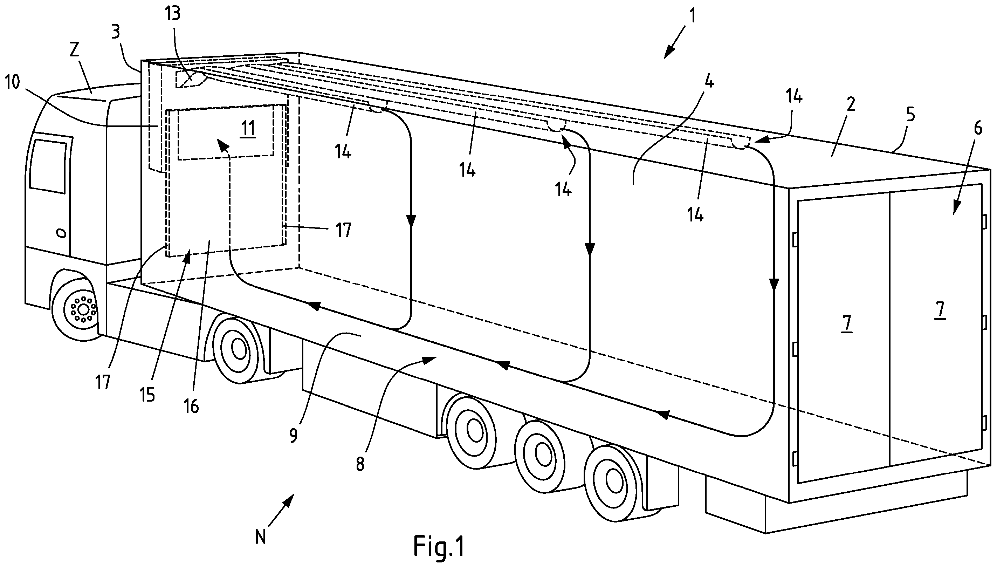

In der Fig. 1 ist ein Nutzfahrzeug N in Form eines Sattelaufliegers mit einem Nutzfahrzeugaufbau in Form eines Kofferaufbaus 1 in einer perspektivischen Ansicht dargestellt, das von einer Zugmaschine Z gezogen wird. Der Kofferaufbau 1 umfasst ein festes Dach 2, eine feste Stirnwand 3, zwei feste Seitenwände 4,5 und eine feste Rückwand 6, die im Wesentlichen durch zwei Flügeltüren 7 gebildet wird. Zudem umfasst der Kofferaufbau 1 einen Laderaum 8, der nach unten durch einen Ladeboden zum Abstellen von Ladung 9 begrenzt wird. Die Seitenwände 4,5, die Stirnwand 3, die Flügeltüren 7 und das Dach 2 werden wenigstens im Wesentlichen aus Paneelen gebildet.

An der Stirnwand 3 ist eine Transportkältemaschine 10 montiert, die überwiegend außerhalb des Laderaums 8 angeordnet ist. Zum Kühlen des Laderaums 8 saugt die Transportkältemaschine 10 über eine mit dem Laderaum 8 verbundene und mit einem Gitter 24 verschlossene Einlassöffnung 11 zu kühlende Luft aus dem Laderaum 8 an und kühlt die angesaugte Luft auf eine gewünschte Temperatur herunter. Anschließend wird die abgekühlte Luft als Kühlluft wieder zurück in den Laderaum 8 geblasen. Dabei strömt die Kühlluft über drei in der Fig. 1 nicht dargestellte Auslassöffnungen 12, die oberhalb der Einlassöffnung 11 angeordnet sind, aus der Transportkältemaschine 10 in drei innerhalb des Laderaums 8 angeordnete Luftleiteinrichtungen 13. Mittels der Luftleiteinrichtungen 13 wird die Kühlluft dann in drei Luftführungskanäle 14 geleitet. Über die Luftführungskanäle 14 wird die Kühlluft schließlich zu hinteren Bereichen des Laderaums 8 transportiert, wo die Kühlluft aus den Luftführungskanälen 14 in den Laderaum 8 strömt und dort nach unten in Richtung des Ladebodens 9 absinkt. Die Luft strömt anschließend entlang des Ladebodens 9 in Richtung der Stirnwand 3 des Kofferaufbaus 1. Dort wird die Luft dann als zu kühlende Luft über Luftleitkanäle 15 zwischen der Stirnwand 3, einer Zirkulationswand 16 und zwei seitlichen Begrenzungen 17 zwischen der Stirnwand 3 und der Zirkulationswand 16 zu der Einlassöffnung 11 der Transportkältemaschine 10 geleitet. Es bildet sich so ein geschlossener Luftkreislauf.

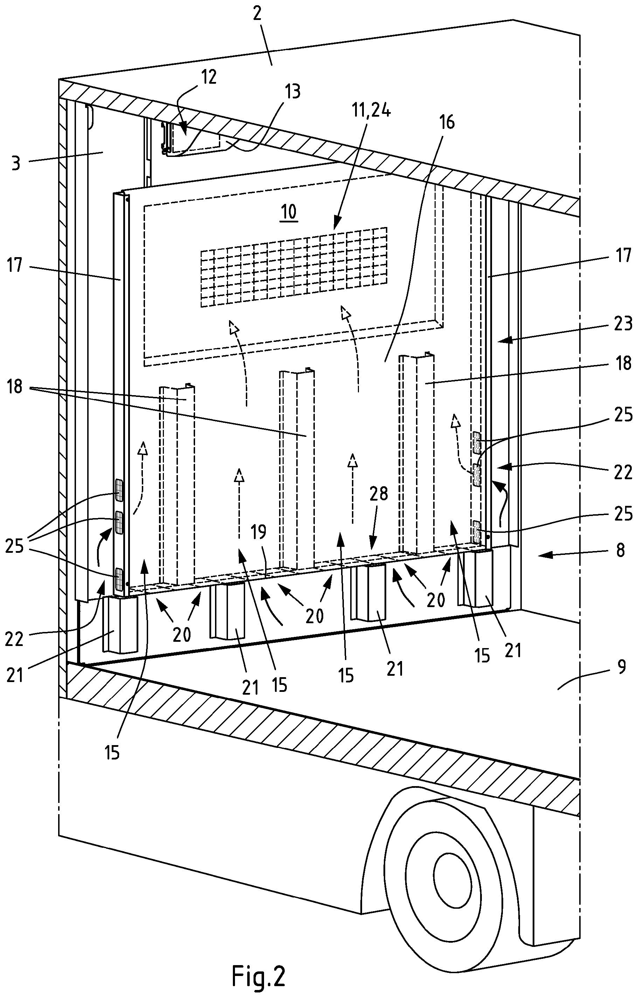

In der Fig. 2 ist der Kofferaufbau 1 im Bereich der Stirnwand 3 in einer perspektivischen Ansicht dargestellt. Beim dargestellten und insoweit bevorzugten Kofferaufbau 1 ist die Zirkulationswand 16 über drei sich in vertikaler Richtung also senkrecht zum Boden 9 bzw. Dach 2, erstreckende Abstandshalter 18 an der Stirnwand 3 gehalten, die jeweils als Profil mit hutförmigem Querschnitt ausgebildet und aus einem Stahlblech hergestellt sind. Dabei erstreckt sich die Zirkulationswand 16 zwischen den zwei sich ebenfalls in vertikaler Richtung erstreckenden Begrenzungen 17, die bedarfsweise ebenfalls als Abstandshalter angesehen werden können. Dementsprechend erstrecken sich auch die Luftleitkanäle 15, die zwischen den Begrenzungen 17 und den Abstandshaltern 18 oder zwischen den Abstandshaltern untereinander ausgebildet sind, in vertikaler Richtung. Zwischen dem unteren Rand 19 der Zirkulationswand 16 und der Stirnwand 3 weisen die Luftleitkanäle 15 eine untere Einströmaussparung 20 auf, über die die zu kühlende Luft im Bereich des Bodens 9 in vertikaler Richtung in die Luftleitkanäle 15 einströmen kann. Die untere Einströmaussparung 20 erstreckt sich dabei über wenigstens im Wesentlichen die gesamte Breite der Zirkulationswand 16.

Vorliegend sind zwischen der Zirkulationswand 16 und dem Boden 9 unterhalb der unteren Einströmaussparung 20 zudem Distanzelemente 21 an der Stirnwand 3 befestigt, die ebenso wie die Abstandshalter 18 als Stahlblechprofile mit hutförmigem Querschnitt ausgebildet sind und ein Versperren der unteren Einströmaussparungen 20, etwa durch fehlerhafte Beladung des Laderaums 8, verhindern. Solche Distanzelemente 21 sind jedoch nicht zwingend erforderlich.

Zu beiden Seiten der Zirkulationswand 16 sind zwischen der jeweiligen Begrenzung 17 und der entsprechenden Seitenwand 4, 5 des Kofferaufbaus 1 einerseits sowie zwischen der Stirnwand 3 und der durch die dem Laderaum 8 zugewandte Fläche der Zirkulationswand 16 definierte Anfahrebene andererseits seitliche Kanäle für die Luft 22,23 ausgebildet, die sich ebenfalls in vertikaler Richtung erstrecken.

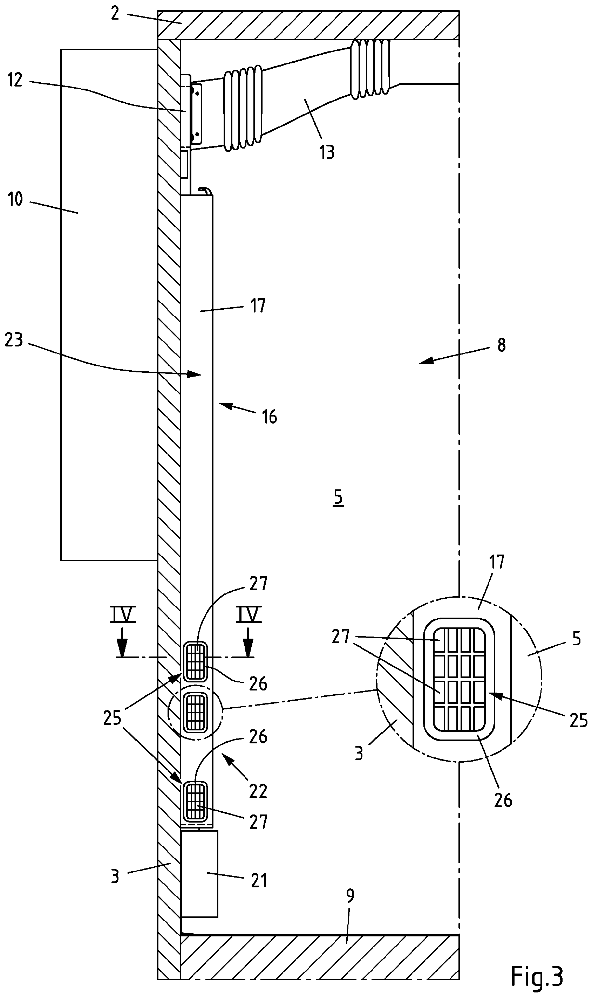

Wie insbesondere in der Fig. 3 dargestellt ist, sind in den seitlichen Begrenzungen 17 jeweils drei über die seitlichen Kanäle 22,23 für zu kühlende Luft zugängliche seitliche Einströmaussparungen 25 vorgesehen, durch die zu kühlende Luft hinter die Zirkulationswand 16 und in die Luftleitkanäle 15 gelangen kann. Dabei weisen die in den Begrenzungen 17 angeordneten seitlichen Einströmaussparungen 25 vorliegend jeweils einen länglichen Öffnungsquerschnitt auf, der sich in Längsrichtung der zugehörigen Begrenzung 17, die vorliegend der vertikalen Richtung entspricht, erstreckt.

In den seitlichen Einströmaussparungen 25 sind jeweils Öffnungseinsätze 26 aus Kunststoff vorgesehen, die in die seitlichen Einströmaussparungen 25 eingesetzt und dort eingerastet worden sind. Die Öffnungseinsätze 26 weisen jeweils eine Reihe von Einströmöffnungen 27 auf, die jeweils nicht größer sind als 600 mm². Im Bereich der Einströmöffnungen 27 sind die Öffnungseinsätze 26 nach Art eines Gitters ausgebildet. Die Öffnungseinsätze 26 und damit die Einströmöffnungen 27 sind dabei unmittelbar dem seitlichen Rand der Zirkulationswand 16 zugeordnet.

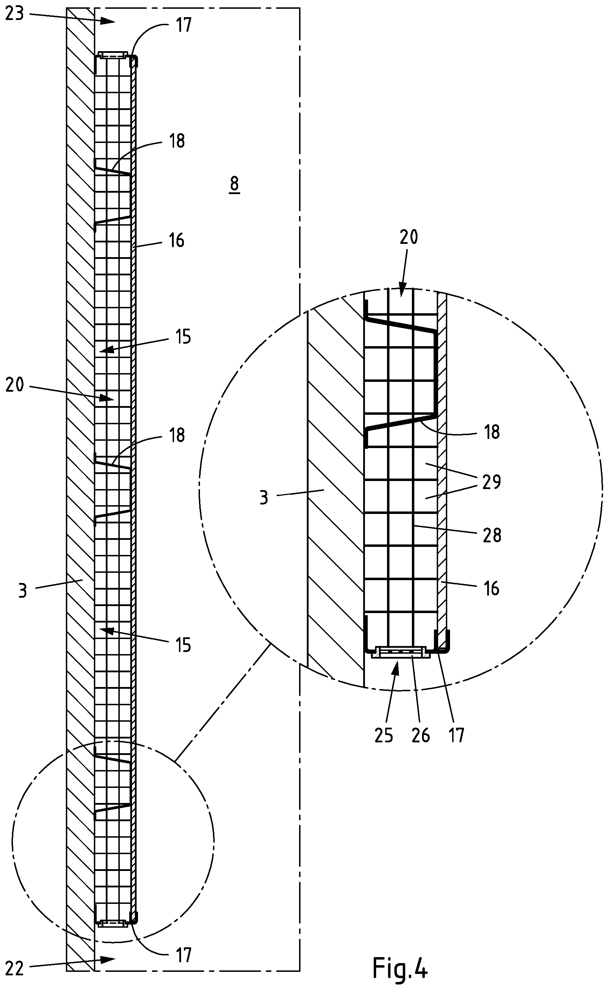

In der Fig. 4 ist die untere Einströmaussparung 20 zwischen der Stirnwand 3, der Zirkulationswand 16 und den seitlichen Begrenzungen 17 vorgesehen. An die Einströmaussparung 20 schließen sich nach oben die Luftleitkanäle 15 an. Die untere Einströmaussparung 20 ist etwa auf der Höhe des unteren Rands der Zirkulationswand 16 angeordnet und erstreckt sich wenigstens im Wesentlichen über die gesamte Breite der Zirkulationswand 16. In der unteren Einströmaussparung 20 ist ein Öffnungseinsatz 28 aus einer metallischen Gitterstruktur vorgesehen, die vorliegend aus einer Reihe von Stahldrähten gebildet ist und eine Vielzahl von Einströmöffnungen 29 bereitstellt. Die Einströmöffnungen 29 weisen jeweils eine Fläche von kleiner 750 mm² auf. Der Öffnungseinsatz 28 erstreckt sich zudem ebenfalls wenigstens im Wesentlichen über die gesamte Breite der Zirkulationswand 16. Vorliegend ist der Öffnungseinsatz 28 mit seinen seitlichen Enden in die zugeordneten untersten Einströmaussparungen 25 eingelegt. Dies ist jedoch nicht zwingend erforderlich.

### Bezugszeichenliste

- 1: Kofferaufbau
- 2: Dach
- 3: Stirnwand
- 4,5: Seitenwand
- 6: Rückwand
- 7: Flügeltür
- 8: Laderaum
- 9: Boden
- 10: Transportkältemaschine
- 11: Einlassöffnung
- 12: Auslassöffnung
- 13: Luftleiteinrichtung
- 14: Luftführungskanal
- 15: Luftleitkanal
- 16: Zirkulationswand
- 17: Begrenzung
- 18: Abstandshalter
- 19: unterer Rand
- 20: untere Einströmaussparung
- 21: Distanzelement
- 22,23: seitlicher Luftkanal
- 24: Gitter
- 25: seitliche Einströmaussparung
- 26: Öffnungseinsatz
- 27: Einströmöffnung
- 28: Öffnungseinsatz
- 29: Einströmöffnung
- N: Nutzfahrzeug
- Z: Zugmaschine

## Patentansprüche

1. Kofferaufbau (1) für ein Nutzfahrzeug (N), insbesondere Lastkraftwagen, Anhänger oder Sattelauflieger, mit einer einen Laderaum (8) nach vorne begrenzenden Stirnwand (3), wobei an der Stirnwand (3) eine Transportkältemaschine (10) zum Kühlen des Laderaums (8) vorgesehen ist, wobei die Transportkältemaschine (10) wenigstens eine Einlassöffnung (11) für zu kühlende Luft und wenigstens eine Auslassöffnung (12) zum Ausblasen von Kühlluft aufweist, wobei eine von der Stirnwand (3) in Richtung des Laderaums (8) beabstandete und eine Anfahrebene definierende Zirkulationswand (16) vorgesehen ist, wobei zwischen der Stirnwand (3) und der Zirkulationswand (16) wenigstens ein Luftleitkanal (15) zum Leiten der zu kühlenden Luft aus dem Laderaum (8) zu der wenigstens einen Einlassöffnung (11) ausgebildet ist und wobei der wenigstens eine Luftleitkanal (15) eine Reihe von Einströmöffnungen (27,29) zum Einströmen von zu kühlender Luft in den Luftleitkanal (15) aufweist,
**dadurch gekennzeichnet, dass**
die Einströmöffnungen (27,29) eine Größe von kleiner 2000 mm² aufweisen.

2. Kofferaufbau nach Anspruch 1,
**dadurch gekennzeichnet, dass**
die Einströmöffnungen (27,29) eine Größe von kleiner 1000 mm², vorzugsweise kleiner 750 mm², insbesondere kleiner 600 mm², aufweisen.

3. Kofferaufbau nach Anspruch 1 oder 2,
**dadurch gekennzeichnet, dass**
die Einströmöffnungen (27,29) wenigstens einem seitlichen Rand der Zirkulationswand (16) und/oder einem unteren Rand der Zirkulationswand (16) zugeordnet sind.

4. Kofferaufbau nach einem der Ansprüche 1 bis 3,
**dadurch gekennzeichnet, dass**
die Einströmöffnungen (27,29) durch wenigstens einen Öffnungseinsatz (26,28) in wenigstens einer Einströmaussparung (20,25) des wenigstens einen Luftleitkanals (15) gebildet sind.

5. Kofferaufbau nach Anspruch 4,
**dadurch gekennzeichnet, dass**
der wenigstens eine Öffnungseinsatz (26,28) im Bereich der Einströmöffnungen (27,29) wenigstens im Wesentlichen in Form von Drähten, Bändern, eines Netzes, eines Lochblechs und/oder eines Gitters ausgebildet ist.

6. Kofferaufbau nach Anspruch 4 oder 5,
**dadurch gekennzeichnet, dass**
der wenigstens eine Öffnungseinsatz (26,28) aus einem Kunststoff, faserverstärkten Kunststoff, und/oder einem Metall, insbesondere Stahl oder Aluminium, gebildet ist.

7. Kofferaufbau nach einem der Ansprüche 4 bis 6,
**dadurch gekennzeichnet, dass**
der wenigstens eine Öffnungseinsatz (26,28) formschlüssig und/oder kraftschlüssig in die wenigstens eine Einströmaussparung (27,29) eingesetzt, insbesondere eingeklipst oder eingelegt, ist.

8. Kofferaufbau nach einem der Ansprüche 4 bis 6,
**dadurch gekennzeichnet, dass**
sich die wenigstens eine Einströmaussparung (27,29) wenigstens im Wesentlichen über die gesamte Breite der Zirkulationswand (16) erstreckt und/oder dass sich der wenigstens eine Öffnungseinsatz (26,28) wenigstens im Wesentlichen über die gesamte Breite der Zirkulationswand (16) erstreckt.
